(19) **Europäisches Patentamt**
**European Patent Office**
**Office européen des brevets**

(11) **EP 4 280 510 A1**

(12) **EUROPEAN PATENT APPLICATION**
published in accordance with Art. 153(4) EPC

(43) Date of publication:
**22.11.2023 Bulletin 2023/47**

(21) Application number: **21919059.2**

(22) Date of filing: **06.12.2021**

(51) International Patent Classification (IPC):
**H04L 5/00** (2006.01)

(52) Cooperative Patent Classification (CPC):
**H04L 5/00**

(86) International application number:
**PCT/CN2021/135718**

(87) International publication number:
**WO 2022/151868 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.01.2021 CN 202110065131**

(71) Applicant: **Datang Mobile Communications
Equipment Co., Ltd.
Beijing 100085 (CN)**

(72) Inventor: **WANG, Lei
Beijing 100085 (CN)**

(74) Representative: **Studio Torta S.p.A.
Via Viotti, 9
10121 Torino (IT)**

(54) **DMRS BUNDLING WINDOW DETERMINATION METHOD AND APPARATUS, AND STORAGE MEDIUM**

(57) The embodiments of the present disclosure provide a demodulation reference signal (DMRS) bundling window determination method and apparatus, and a storage medium. The method comprises: on the basis of the configuration of a network side device or predefined rules agreed upon between the network side device and a terminal, determining the size of a DMRS bundling window of an uplink multi-slot DMRS transmission pattern. The embodiments of the present disclosure achieve the determination of a DMRS time domain range.

Determining a DMRS bundling window size for an uplink multi-slot DMRS transmission pattern based on a configuration from a network side device or a predefined rule agreed by a network side device and the terminal ⌐ 101

**FIG. 1**

EP 4 280 510 A1

**Description**

**CROSS-REFERENCE TO RELATED APPLICATION**

The present application claims priority to Chinese Patent Application No. 2021100651318, filed on January 18, 2021, entitled "DMRS Bundling Window Determination Method and Apparatus, and Storage Medium", which is hereby incorporated by reference in its entirety.

**FIELD**

The present application relates to the field of communication, and in particular to methods and apparatuses for determining a DMRS bundling window, and a storage medium.

**BACKGROUND**

In a 5th generation new radio access technology (5th Generation New RAT, NR) mobile communication system, the coverage range of a cell is an indicator that operators pay close attention to. However, the transmission for uplink channel is a bottleneck for coverage in the 5G NR system. How to enhance the coverage range of the uplink channel is an important issue at present. Currently, a transport block (TB) being processed over multiple slots and cross-slot channel estimation are candidate technologies for uplink channel enhancement. Since both the technologies involve transmitting uplink information over multiple consecutive slots, the designs of their demodulation reference signals (DMRS) are different from the related art where a slot serves as a basic unit for determining a DMRS pattern. A certain balance between DMRS resource overhead and the brought gain in channel estimation accuracy is existed. To achieve optimal transmission performance, corresponding DMRS transmission patterns need to be designed on multiple consecutive slots.

A fundamental issue in designing corresponding DMRS transmission patterns on multiple consecutive slots is how to determine a time domain range defined by multi-slot DMRS patterns, that is, a DMRS bundling window size. However, there is no clear solution for determining the DMRS bundling window size in the related art.

**SUMMARY**

Embodiments of the present application provide methods and apparatuses for determining a demodulation reference signals (DMRS) bundling window, and a storage medium, which solve a problem that the traditional DMRS pattern cannot meet the requirements for multi-slot transmission.

An embodiment of the present application provides a method for determining a DMRS bundling window, applied to a terminal, including:

determining a DMRS bundling window size for an uplink multi-slot DMRS transmission pattern based on a configuration from a network side device or a predefined rule agreed by a network side device and the terminal.

An embodiment of the present application provides a method for determining a DMRS bundling window, applied to a network side device, including:

determining a DMRS bundling window size for an uplink multi-slot DMRS transmission pattern based on a predefined rule, where the predefined rule is pre-agreed between the network side device and a terminal; or configuring a DMRS bundling window size for an uplink multi-slot DMRS transmission pattern to a terminal.

An embodiment of the present application provides a terminal, including:

a processor,
a memory storing a computer program, and
a transceiver transmitting and receiving data under a control of the processor,
where the computer program, when executed by the processor, causes the terminal to perform the following operations of:
determining a DMRS bundling window size for an uplink multi-slot DMRS transmission pattern based on a configuration from a network side device or a predefined rule agreed by a network side device and the terminal.

An embodiment of the present application provides a network side device, including:

a processor,
a memory storing a computer program, and
a transceiver transmitting and receiving data under a control of the processor,

where the computer program, when executed by the processor, causes the network side device to perform the following operations of:

determining a DMRS bundling window size for an uplink multi-slot DMRS transmission pattern based on a predefined rule, where the predefined rule is pre-agreed between the network side device and a terminal; or configuring a DMRS bundling window size for an uplink multi-slot DMRS transmission pattern to a terminal.

An embodiment of the present application provides an apparatus for determining a DMRS bundling window, applied to a terminal, including:

a determining module, used for determining a DMRS bundling window size for an uplink multi-slot DMRS transmission pattern based on a configuration from a network side device or a predefined rule agreed by a network side device and the terminal.

An embodiment of the present application provides an apparatus for determining a DMRS bundling window, applied to a network side device, including:

a configuring module, used for determining a DMRS bundling window size for an uplink multi-slot DMRS transmission pattern based on a predefined rule, where the predefined rule is pre-agreed between the network side device and a terminal; or configuring a DMRS bundling window size for an uplink multi-slot DMRS transmission pattern to a terminal.

An embodiment of the present application provides a processor-readable storage medium storing a computer program that causes, when executed by a processor, the processor to perform any one of the above methods.

Embodiments of the present application provide methods and apparatuses for determining a DMRS bundling window, and a storage medium. In the present application, the DMRS bundling window size for the uplink multi-slot DMRS transmission pattern is determined based on the configuration from the network side device or the predefined rule agreed by the network side device and the terminal. As such, a time domain range for the uplink multi-slot DMRS transmission pattern may be determined, and the DMRS transmission pattern may be designed based on the time domain range, which solves the problem of the traditional DMRS pattern cannot meet the requirements for multi-slot transmission, effectively improves the transmission performance of uplink channels and increases the coverage range of the uplink channels.

## BRIEF DESCRIPTION OF DRAWINGS

In order to clearly illustrate the solutions of the embodiments according to the present application or the related art, the accompanying drawings used in the description of the embodiments or the related art are briefly introduced below. It should be noted that the drawings in the following description are only some embodiments of the present application. For those of ordinary skill in the art, other drawings can be obtained according to these drawings without creative effort.

FIG. 1 is a schematic flowchart showing steps of a method for determining a demodulation reference signal (DMRS) bundling window applied to a terminal according to an embodiment of the present application;

FIG. 2 is a schematic flowchart showing steps of a method for determining a DMRS bundling window applied to a network side device according to an embodiment of the present application;

FIG. 3 is a first schematic diagram of determining a DMRS bundling window according to an embodiment of the present application;

FIG. 4 is a second schematic diagram of determining a DMRS bundling window according to an embodiment of the present application;

FIG. 5 is a third schematic diagram of determining a DMRS bundling window according to an embodiment of the present application;

FIG. 6 is a fourth schematic diagram of determining a DMRS bundling window according to an embodiment of the present application;

FIG. 7 is a fifth schematic diagram of determining a DMRS bundling window according to an embodiment of the present application;

FIG. 8 is a sixth schematic diagram of determining a DMRS bundling window according to an embodiment of the present application;

FIG. 9 is a schematic structural diagram of a terminal according to an embodiment of the present application;

FIG. 10 is a schematic structural diagram of a network side device according to an embodiment of the present application;

FIG. 11 is a schematic block diagram of an apparatus for determining a DMRS bundling window applied to a terminal according to an embodiment of the present application; and

FIG. 12 is a schematic block diagram of an apparatus for determining a DMRS bundling window applied to a network side device according to an embodiment of the present application.

**DETAILED DESCRIPTION OF THE EMBODIMENTS**

The solutions of the embodiments of the present application are clearly and completely described below in combination with the accompanying drawings of the embodiments of the present application. The embodiments described are a part of the embodiments of the present application, rather than all the embodiments. Based on the embodiments of the present application, all other embodiments obtained by those of ordinary skill in the art without creative labor are within the scope of the protection of the present application.

In the related art, a demodulation reference signal (DMRS) pattern for an uplink transmission is determined in a semi-static configuration manner with one slot as a unit. That is, a purpose of traditional DMRS pattern design is to achieve a transmission performance of uplink data within one slot. In a case that uplink data is transmitted over multiple slots, the traditional DMRS pattern cannot meet requirements for multi-slot transmission. In a case that uplink data is transmitted over multiple consecutive slots, in order to achieve an optimal transmission performance, DMRS needs to be designed with multiple slots as a granularity to achieve a balance between channel estimation accuracy and DMRS resource overhead.

The DMRS in traditional system is designed with one slot as the unit. In a case of designing DMRS with multiple consecutive slots as the unit, no corresponding instructions can be provided. As a result, a method for selecting an appropriate DMRS pattern over multiple consecutive slots based on channel transmission conditions cannot be achieved.

Embodiments of the present application provide methods and apparatuses for determining a DMRS bundling window, and a storage medium, which solve a problem of the traditional DMRS pattern cannot meet the requirements for multi-slot transmission.

The methods and the apparatuses are based on the same conception. Since the principles of the methods and the apparatuses to solve the problems are similar, the implementation of the apparatuses and methods can be referred to each other, and the similar part is not repeated.

The solutions according to the embodiments of the present application can be applicable to various systems, for example, 5G systems. For example, the applicable systems can be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and can further include a core network part, such as an evolved packet system (EPS), a 5G system (5GS), and the like.

The terminal device in the embodiments of the present application can be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device can communicate with one or more core networks (CNs) via a radio access network (RAN), and the wireless terminal can be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application. Since the terminal device and other network devices (such as a core network device, an access network device (i.e. a network side device)) together form a network being able to support communication, the terminal device can be regarded as a network device in the present application.

The network device in the embodiments of the present application can be a network side device, and the network side device can include multiple cells providing services for the terminal. Depending on the specific scenario, the network side device may be called an access point, or a device communicating with a wireless terminal device through one or more sectors on the air interface in the access network, or other names. The network device can be used for exchanging received air frames with internet protocol (IP) packets, and acting as a router between the wireless terminal device and the rest of the access network, where the rest of the access network can include an IP communication network. The network device can also coordinate attribute management for the air interface. For example, the network device in the embodiments of the present application may be a base transceiver station (BTS) in a global system for mobile communications (GSM) or a code division multiple access (CDMA), or may be a node B in a wide-band code division multiple access (WCDMA), or may be an evolutional node B (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

In an embodiment, it should be noted that the term "an embodiment" or "one embodiment" mentioned throughout the description means that a particular feature, structure or characteristic associated with the embodiment is included in at least one embodiment of the present application. Therefore, the phrases "in an embodiment" or "in one embodiment" appearing throughout the description do not necessarily refer to the same embodiment. Furthermore, these specific features, structures or characteristics may be combined in any suitable manner in one or more embodiments.

The following is a detailed illustration for the present application.

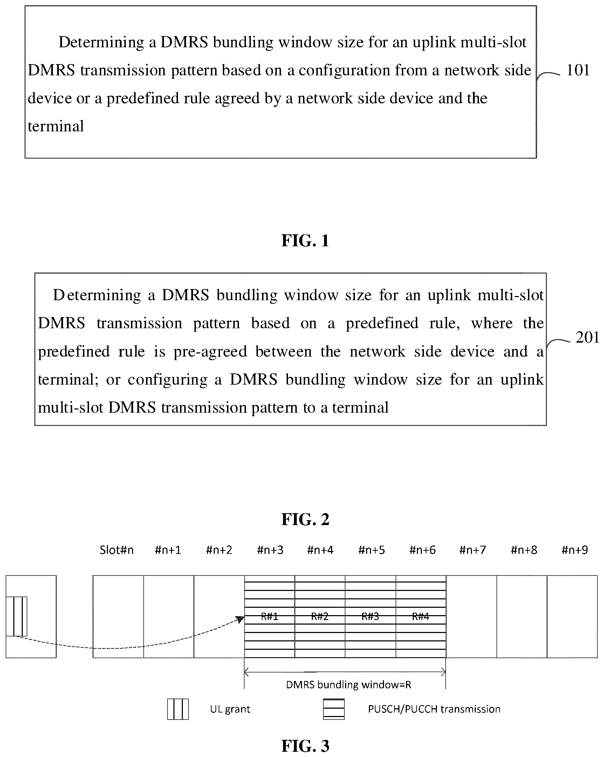

FIG. 1 is a schematic flowchart showing steps of a method for determining a demodulation reference signal (DMRS) bundling window applied to a terminal according to an embodiment of the present application. As shown in FIG. 1, the method includes the following steps.

Step 101: determining a DMRS bundling window size for an uplink multi-slot DMRS transmission pattern based on a configuration from a network side device or a predefined rule agreed by a network side device and the terminal.

In an embodiment, the multi-slot DMRS transmission pattern refers to a DMRS transmission pattern designed in a unit of multiple slots.

In the step 101, the terminal may determine the DMRS bundling window size for the uplink multi-slot DMRS transmission pattern based on the configuration from the network side device, or may determine the DMRS bundling window size for the uplink multi-slot DMRS transmission pattern based on the predefined rule agreed by the network side device and the terminal. As such, a time domain range for the uplink multi-slot DMRS transmission pattern may be determined, and the DMRS transmission pattern may be designed based on the time domain range, which solves the problem of the traditional DMRS pattern cannot meet the requirements for multi-slot transmission, effectively improves the transmission performance of uplink channels and increases the coverage range of the uplink channels.

In an embodiment, in a case of determining the DMRS bundling window size for the uplink multi-slot DMRS transmission pattern based on the predefined rule agreed by the network side device and the terminal, any one of the following schemes may be used.

Scheme 1: determining the DMRS bundling window size based on an uplink channel repetition factor.

In the scheme 1, the DMRS bundling window size is associated with the uplink channel repetition factor, that is, the DMRS bundling window size is associated with the number of transmission time intervals (TTI) used for the uplink channel repetition.

In an embodiment, in a case of determining the DMRS bundling window size based on the uplink channel repetition factor, any one of the following modes may be used.

Mode (1): determining the uplink channel repetition factor as the DMRS bundling window size.

In the mode (1), the uplink channel repetition factor may be directly determined as the DMRS bundling window size, that is, the DMRS bundling window size is the same as the uplink channel repetition factor.

In an embodiment, the uplink channel repetition factor may be semi-statically indicated by radio resource control (RRC) signaling or may be indicated by an associated information field in downlink control information (DCI).

Mode (2): in a case that the uplink channel repetition factor is greater than a first given threshold value, determining the first given threshold value as the DMRS bundling window size; or in a case that the uplink channel repetition factor is less than the first given threshold value, determining the uplink channel repetition factor as the DMRS bundling window size.

For example, in the mode (2), the first threshold value for the uplink channel repetition factor may be given, and in a case that the uplink channel repetition factor is greater than the first threshold value, the first threshold value may be determined as the DMRS bundling window size; or in a case that the uplink channel repetition factor is less than the first threshold value, the uplink channel repetition factor R may be determined as the DMRS bundling window size. As such, the effectiveness of the determined DMRS bundling window size may be ensured.

It should be noted that the first given threshold value may be indicated by explicit signaling transmitted from the network side device, or may be determined by a predefined protocol, or may be associated with a terminal capability, which is not limited in the present application.

Mode (3): determining the DMRS bundling window size based on a given function relationship between the DMRS bundling window size and the uplink channel repetition factor.

For example, in the mode (3), the given function relationship between the DMRS bundling window size and the uplink channel repetition factor may be predefined, and the DMRS bundling window size may be implicitly deduced based on the given function relationship through the uplink channel repetition factor.

For example, the given function relationship may be DMRS bundling window size = floor (repetition factor/N), where N is a positive integer greater than 1.

In the present application, the DMRS bundling window size may be determined based on the uplink channel repetition factor by any one of the above modes.

Scheme 2: in a case that a function of transmitting one transport block over multiple slots is enabled, determining the DMRS bundling window size based on a number of slots for transmitting one transport block.

In the scheme 2, the DMRS bundling window size may be associated with a multi-slot indication for an uplink channel transmission, that is, the DMRS bundling window size may be associated with whether the function of transmitting one transport block over multiple slots is enabled.

In an embodiment, in a case that the function of transmitting one transport block over multiple slots is enabled, the DMRS bundling window size may be determined based on the number of slots for transmitting the one transport block. In this case, any one of the following modes may be used to determine the DMRS bundling window size.

Mode (1): determining the number of slots for transmitting one transport block as the DMRS bundling window size.

For example, the number of slots for transmitting one transport block may be directly determined as the DMRS bundling window size, that is, the DMRS bundling window size is the same as the number of slots for transmitting one transport block.

Mode (2): in a case that the number of slots for transmitting one transport block is greater than a second given threshold value, determining the second given threshold value as the DMRS bundling window size; or in a case that the number of slots for transmitting one transport block is less than the second given threshold value, determining the number of slots for transmitting one transport block as the DMRS bundling window size.

For example, in the mode (2), a second threshold value for the number of slots for transmitting one transport block may be given, and in a case that the number of slots for transmitting one transport block is greater than the second threshold value, the second threshold value may be determined as the DMRS bundling window size; or in a case that the number of slots for transmitting one transport block is less than the second threshold value, the number of slots for transmitting one transport block may be determined as the DMRS bundling window size. As such, the effectiveness of the determined DMRS bundling window size may be ensured.

It should be noted that the second given threshold value may be indicated by explicit signaling transmitted by the network side device, or may be determined by a predefined protocol, or may be associated with a terminal capability, which is not limited in the present application.

Mode (3): determining the DMRS bundling window size based on a given function relationship between the DMRS bundling window size and the number of slots for transmitting one transport block.

For example, in the mode (3), the given function relationship between the DMRS bundling window size and the number of slots for transmitting one transport block may be predefined, and the DMRS bundling window size may be implicitly deduced based on the given function relationship through the number of slots for transmitting one transport block.

In the present application, the DMRS bundling window size may be determined based on the number of slots for transmitting one transport block by any one of the above modes.

Scheme 3: predefining the DMRS bundling window size.

In the scheme 3, the DMRS bundling window size may be determined through a predefined mode. In a case of predefining the DMRS bundling window size, one of the following modes may be used:

predefining the DMRS bundling window size based on a DMRS bundling window size supported by a terminal type; or predefining the DMRS bundling window size based on a DMRS bundling window size supported by a terminal capability.

In an embodiment, terminals with different types support corresponding DMRS bundling window sizes. In this embodiment, the terminal may predefine the DMRS bundling window size based on the terminal type.

In an embodiment, terminals with different capabilities support corresponding DMRS bundling window sizes. In this embodiment, the terminal may predefine the DMRS bundling window size based on the terminal capability. It should be noted that the terminal capability is required to be reported to the network side device.

As such, the DMRS bundling window size may be predefined.

In the aforementioned embodiments, the terminal may determine the DMRS bundling window size based on the predefined rule, such as the uplink channel repetition factor, the number of slots for transmitting one transport block or a predefined mode.

In an embodiment, the terminal may determine whether the terminal has a DMRS bundling capability based on the terminal capability, and in a case that the terminal has the DMRS bundling capability, the steps of determining the DMRS bundling window size are performed.

In a case that the terminal does not have the DMRS bundling capability, the DMRS bundling window size does not need to be determined.

In an embodiment, the terminal may transmit terminal capability information to the network side device. The terminal capability information carries information indicating whether the terminal has the DMRS bundling capability. As such, the network side device may determine whether the terminal has the DMRS bundling capability based on the terminal capability information. In a case that the terminal has the DMRS bundling capability, the network side device determines to monitor and receive DMRS within a determined DMRS bundling window and perform joint channel estimation. In a case that the terminal does not have the DMRS bundling capability, the DMRS bundling window does not need to be determined.

In an embodiment, in a case that the terminal determines the DMRS bundling window size for the uplink multi-slot DMRS transmission pattern based on the configuration from the network side device, the terminal may receive indication information configured by the network side device through RRC signaling or DCI, where the indication information carries the DMRS bundling window size, and then the terminal may determine the DMRS bundling window size based on the indication information.

In an embodiment, the DMRS bundling window size may be indicated by an explicit bit in DCI or an RRC signaling.

In an embodiment, the DMRS bundling window takes effect in a case that the DMRS bundling window size is less than or equal to the number of transmission time intervals (TTI) used for the uplink transmission.

In an embodiment, the aforementioned DCI indicating the DMRS bundling window size is UE-specific DCI or common DCI, and the indication information is carried by an explicit bit in the UE-specific DCI or by a reserved bit in the common DCI.

For example, the UE-specific DCI may be DCI scrambled by cell radio network temporary identifier (C-RNTI) or temporary cell radio network temporary identifier (TC-RNTI).

For example, the common DCI may be DCI scrambled by system information radio network temporary identifier (SI-RNTI), random access radio network temporary identifier (RA-RNTI) and/or paging radio network temporary identifier (P-RNTI), and a DCI format of the common DCI is 1_0.

It should be noted that the indication information carried by reserved bits in the common DCI indicates a group of the DMRS bundling window size, and the terminal may determine which DMRS bundling window size to be used based on its own capability.

By the aforementioned embodiments, it can be achieved that the network side device configures the DMRS bundling window size for the terminal.

In an embodiment, after the DMRS bundling window size for the uplink multi-slot DMRS transmission pattern is determined, the DMRS bundling window size may be divided based on a time division duplex (TDD) resource configuration or an invalid symbol to determine actual DMRS bundling window sizes.

For example, a determined DMRS bundling window cannot include any downlink (DL) symbols, or semi-static flexible symbols for transmitting SSB/CORESET#0, or invalid symbols indicated by higher layer signaling. In this case, the DMRS bundling window size may be required to be divided based on the TDD resource configuration or the invalid symbol to determine the actual DMRS bundling window sizes.

In an embodiment, after the DMRS bundling window size for the uplink multi-slot DMRS transmission pattern is determined, in a case that frequency hopping for the uplink transmission is enabled, the actual DMRS bundling window size may be determined based on a frequency hopping pattern.

In an embodiment, the actual DMRS bundling window size is less than or equal to a number of slots included in each hop.

For example, in a case that the frequency hopping for the uplink transmission is enabled, the DMRS bundling window size is required to be further determined based on the frequency hopping pattern. In this case, the actual DMRS bundling window size is less than or equal to the number of slots included in each hop.

In the embodiments of the present application, the DMRS bundling window size may be determined. It is achieved to determine the time domain range for the uplink multi-slot DMRS transmission pattern. As such, the DMRS transmission pattern may be designed based on the time domain range, which effectively improves transmission performance for uplink channels and increases the coverage range of the uplink channels.

FIG. 2 is a schematic flowchart showing steps of a method for determining a demodulation reference signal (DMRS) bundling window applied to a network side device according to an embodiment of the present application. As shown in FIG. 2, the method includes the following steps:

step 201: determining a DMRS bundling window size for an uplink multi-slot DMRS transmission pattern based on a predefined rule, where the predefined rule is pre-agreed between the network side device and a terminal; or configuring a DMRS bundling window size for an uplink multi-slot DMRS transmission pattern to a terminal.

In the step 201, the network side device may determine the DMRS bundling window size for the uplink multi-slot DMRS transmission pattern based on a predefined rule pre-agreed between the network side device and the terminal, or configure the DMRS bundling window size for the uplink multi-slot DMRS transmission pattern to the terminal, which enables both the network side device and the terminal to determine the DMRS bundling window size for the uplink multi-slot DMRS transmission pattern. As such, a time domain range for the uplink multi-slot DMRS transmission pattern may be determined, and the DMRS transmission pattern may be designed based on the time domain range, which solves the problem of the traditional DMRS pattern cannot meet the requirements for multi-slot transmission, effectively improves the transmission performance of uplink channels and increases the coverage range of the uplink channels.

In an embodiment, in a case of determining the DMRS bundling window size for the uplink multi-slot DMRS transmission pattern based on the predefined rule, one of the following schemes may be used:

Scheme 1: determining the DMRS bundling window size based on an uplink channel repetition factor.

In an embodiment, in a case of determining the DMRS bundling window size based on the uplink channel repetition factor, any one of the following modes may be used.

Mode (1): determining the uplink channel repetition factor as the DMRS bundling window size.

In an embodiment, the uplink channel repetition factor may be semi-statically indicated to the terminal by radio resource control (RRC) signaling; or the uplink channel repetition factor may be indicated to the terminal by associated information fields in downlink control information (DCI).

Mode (2): in a case that the uplink channel repetition factor is greater than a first given threshold value, determining the first given threshold value as the DMRS bundling window size; or in a case that the uplink channel repetition factor is less than the first given threshold value, determining the uplink channel repetition factor as the DMRS bundling window size.

Mode (3): determining the DMRS bundling window size based on a given function relationship between the DMRS bundling window size and the uplink channel repetition factor.

Scheme 2: in a case that a function of transmitting one transport block over multiple slots is enabled, determining the DMRS bundling window size based on a number of slots for transmitting one transport block.

In a case that the function of transmitting one transport block over multiple slots is enabled, the DMRS bundling window size may be determined based on the number of slots for transmitting the one transport block. In this case, any one of the following modes may be used to determine the DMRS bundling window size.

Mode (1): determining the number of slots for transmitting one transport block as the DMRS bundling window size.

Mode (2): in a case that the number of slots for transmitting one transport block is greater than the second given threshold value, determining the second given threshold value as the DMRS bundling window size; or in a case that the number of slots for transmitting one transport block is less than the second given threshold value, determining the number of slots for transmitting one transport block as the DMRS bundling window size.

Mode (3): determining the DMRS bundling window size based on a given function relationship between the DMRS bundling window size and the number of slots for transmitting one transport block.

Scheme 3: predefining the DMRS bundling window size.

In the scheme 3, the DMRS bundling window size may be determined through a predefined mode. In a case of predefining the DMRS bundling window size, one of the following modes may be used:

predefining the DMRS bundling window size based on a DMRS bundling window size supported by a terminal type; or predefining the DMRS bundling window size based on a DMRS bundling window size supported by a terminal capability.

In the aforementioned embodiments, the network side device may determine the DMRS bundling window size based on the predefined rule. For details, please refer to the associated contents on the terminal side, which are not repeated herein.

In an embodiment, the network side device may receive terminal capability information transmitted by the terminal, where the terminal capability information carries information indicating whether the terminal has the DMRS bundling capability. In a case that it is determined that the terminal has the DMRS bundling capability based on the terminal capability information, the DMRS bundling window size is determined.

In a case that the network side device determines that the terminal does not have the DMRS bundling capability based on the terminal capability information, the DMRS bundling window size does not need to be determined.

In an embodiment, in a case that the network side device configures the DMRS bundling window size for the uplink multi-slot DMRS transmission pattern to the terminal, indication information may be transmitted to the terminal through RRC signaling or DCI, where the indication information carries the DMRS bundling window size.

In an embodiment, the DMRS bundling window takes effect in a case that the DMRS bundling window size is less than or equal to the number of transmission time intervals (TTI) used for the uplink transmission.

In an embodiment, the aforementioned DCI indicating the DMRS bundling window size is UE-specific DCI or common DCI. And the indication information is carried by an explicit bit in the UE-specific DCI or a reserved bit in the common DCI.

For example, the UE-specific DCI may be DCI scrambled by cell radio network temporary identifier (C-RNTI) or temporary cell radio network temporary identifier (TC-RNTI).

For example, the common DCI may be DCI scrambled by system information radio network temporary identifier (SI-RNTI), random access radio network temporary identifier (RA-RNTI) and/or paging radio network temporary identifier (P-RNTI), and a DCI format of the common DCI is 1_0.

It should be noted that the indication information carried by reserved bits in the common DCI indicates a group of the DMRS bundling window sizes. In this case, the terminal may determine which DMRS bundling window size to be used based on its own capability.

By the aforementioned embodiments, it can be achieved that the network side device configures the DMRS bundling window size for the terminal.

In an embodiment, the network side device may divide the DMRS bundling window size based on a time division duplex (TDD) resource configuration or an invalid symbol to determine actual DMRS bundling window sizes.

In an embodiment, in a case that frequency hopping for the uplink transmission is enabled, the actual DMRS bundling window size may be determined based on a frequency hopping pattern.

In an embodiment, the actual DMRS bundling window size is less than or equal to a number of slots included in each hop.

It should be noted that, for details about the above embodiments please refer to associated contents on terminal side method, which are not repeated herein.

The present application is described below through embodiments.

Embodiment one:

It is assumed that some terminals in a network need to perform uplink coverage enhancement. The uplink channel or signal includes at least PUSCH and/or PUCCH. In this embodiment, it is assumed that the uplink coverage enhancement scheme includes processing TB over multiple slots or cross-slot DMRS bundling. The present application does not exclude any other time domain enhancement schemes. In order to achieve the optimal uplink transmission performance, the DMRS transmission patterns based on multiple slots need to be defined. Further, the time domain range defined by the DMRS, namely the DMRS bundling window, needs to be determined firstly (how large a time domain range is used to define a multi- slot DMRS pattern, such as N slots.

In this embodiment, the DMRS bundling window is bound to the uplink channel repetition factor, that is, the DMRS bundling window is bound to the number of TTIs used for the uplink channel repetition. The DMRS bundling window size is the same as the slot number indicated by the repetition. It is assumed that the network side device indicates the uplink repetition factor R for the terminal through semi-static configuration (for PUCCH and PUSCH) or through the time domain resource assignment (TDRA) field in DCI (only for PUSCH), and in this embodiment, it is assumed that R=4. In this case, the DMRS bundling window size is the same as the repetition factor, that is, 4 slots are occupied in the time domain.

After the DMRS bundling window is determined based on the repetition factor, the DMRS bundling window may be divided based on invalid symbols (symbols that cannot be used for the uplink transmission). The following describes three different application scenarios.

Scenario (1): continuous transmission scenario of PUSCH or PUCCH. As shown in FIG. 3, in this scenario, PUSCH and PUCCH are used for data transmission over consecutive slots without any drop or delay due to invalid symbols. In this case, the DMRS bundling window size is the same as the repetition factor. In this embodiment, combined with UL grant, the repetitions include R#1, R#2, R#3 and R#4, and the DMRS bundling window size is 4 which includes slot#n+3 to slot#n+6.

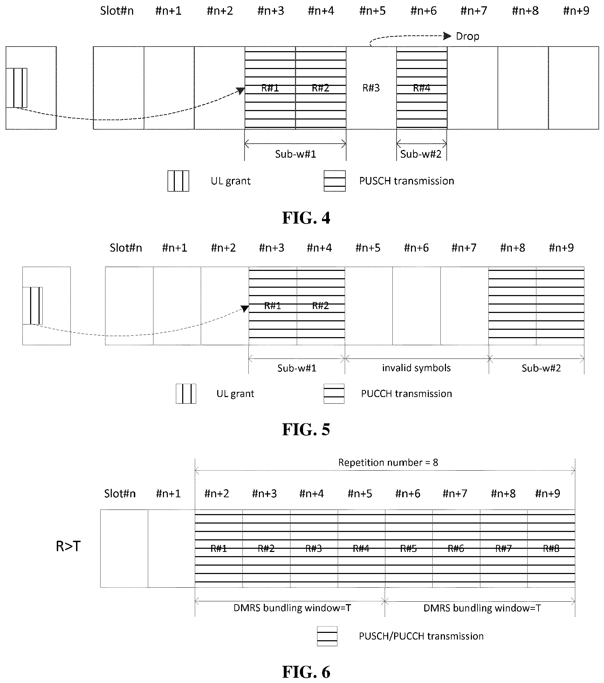

Scenario (2): non-continuous transmission scenario of PUSCH. In this scenario, some PUSCH repetitions are dropped since they conflict with invalid symbols. As shown in FIG. 4, the repetition factor is 4, combined with UL grant, including R#1, R#2, R#3 and R#4, where the third repetition R#3 is dropped since it conflicts with invalid symbol. As such, only 3 repetitions remaining, which are divided into two parts by invalid symbol (the first part includes two consecutive PUSCH repetitions and second part includes only one PUSCH repetition). In this scenario, two DMRS bundling windows, such as Sub-W#1 (containing two slots) and Sub-W#2 (containing one slot), are determined based on repetition factor and invalid symbol.

Scenario (3): non-continuous transmission scenario of PUCCH. In this scenario, some PUCCH repetitions are used to conflict with invalid symbols and are required to delay to a slot where PUCCH may be transmitted for transmission. As shown in FIG. 5, the repetition factor is 4, where slot#n+5 slot#n+6 slot#n+7 are downlink subframes which cannot be used for PUCCH transmission and need to be delayed (in this embodiment, the third and fourth PUCCH repetitions are delayed to slot#n+8 and slot#n+9 for transmission). In this scenario, two DMRS bundling windows, such as Sub-W#1 (containing two slots) and Sub-W#2 (containing two slots), are determined based on repetition factor and invalid symbols.

Embodiment two:

In this embodiment, the DMRS bundling window is bound to the uplink channel repetition factor, that is, the DMRS bundling window is bound to the number of TTIs used for the uplink channel repetition. In a case of determining the DMRS bundling window size, the repetition factor and the relationship between the repetition factor and the first given threshold need to be considered to determine the actual DMRS bundling window size. The first given threshold may be indicated by explicit signaling transmitted by the network side device, or the first given threshold may be determined by a predefined protocol, or the first given threshold may be associated with terminal capability, which is not limited in the present application.

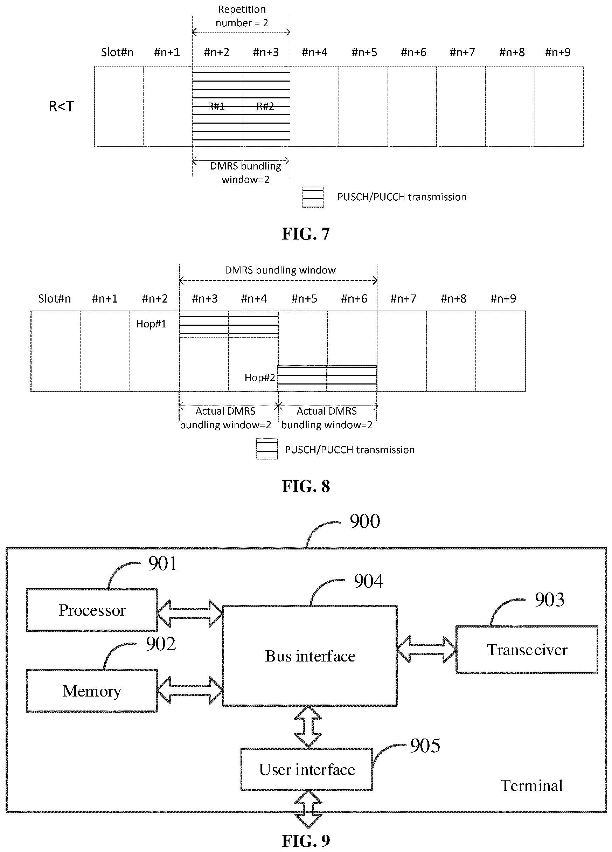

In this embodiment, as shown in FIG. 6, it is assumed that the repetition factor R is 8 (including R#1 to R#8) and the threshold value T is 4. Since R>4, the DMRS bundling window size is determined by the threshold value T, that is, DMRS bundling window size is 4. As shown in FIG. 7, it is assumed that the repetition factor R is 2 (including R#1 and R#2) and T is 4. Since R<4, the DMRS bundling window size is determined by the actual R, that is, DMRS bundling window size is 2.

Further, in this embodiment, the impact of invalid symbols may also be considered in a manner similar to that described in the first embodiment, which is not repeated herein.

Embodiment three:

In this embodiment, the DMRS bundling window is bound to the uplink channel repetition factor, that is, the DMRS bundling window is bound to the number of TTIs used for the uplink channel repetition. A function relationship between DMRS bundling window size and repetition factor is defined, and the DMRS bundling window size may be implicitly deduced through the repetition factor. For example, DMRS bundling window size = floor (repetition factor/N), where N is a positive integer greater than 1. In this embodiment, N=2 is assumed.

Further it can be assumed that this function may only be applied to scenarios where repetition factor R>8, that is, the DMRS bundling window size may be determined by following function relationship:

$$DMRS\ bundling\ window\ size\ = \begin{cases} floor\left(\frac{repetition\ number}{N}\right), otherwise \\ R,\ if\ R > T \end{cases}.$$

In this embodiment, it is assumed that N=2 and the threshold value T=8. If the actual repetition factor is 4, the DMRS bundling window size is 4 based on the above function relationship. If the actual repetition factor is 16, the DMRS bundling window size is 8 based on the above function relationship. The threshold value T may be associated with the terminal capability, or the threshold value T may be configured through explicit signaling transmitted by base station, or the threshold value T may be predefined in a protocol, which is not limited in this embodiment.

Further, in this embodiment, the impact of invalid symbols may also be considered in a manner similar to that described in the first embodiment, which is not repeated herein.

Embodiment four:

The network side device may determine whether to define, determine or indicate the DMRS bundling window based on the capability information reported by the terminal. For example, the terminal with UE capability #A may determine the DMRS bundling window size based on explicit signaling notified by network side device or an implicit manner in a case that repetition is enabled. A terminal without the capability #A may ignore the associated instructions from network side device and only determine the DMRS pattern with the slot granularity.

Embodiment five:

In a case that the terminal needs to transmit one TB over multiple slots, that is, in a case of TB processing on multi-slot scenario, the DMRS bundling window is bound to the multi-slot indication for the uplink channel transmission, that is, the DMRS bundling window is bound to whether the function of transmitting one TB over multiple slots is enabled.

In this case, the method for determining a DMRS bundling window is similar to methods described in first to fourth embodiments above, which is not repeated herein.

Embodiment six:

In this embodiment, the DMRS bundling window size is determined by predefining. For example, one or more different DMRS bundling window sizes may be predefined by a protocol. The terminal may determine the DMRS bundling window size based on its own type or capability.

Terminals with different types supports corresponding DMRS bundling window sizes. For example, RedCap terminal, CE terminal and normal terminal support different DMRS bundling window sizes.

In an embodiment, terminals with different capabilities support corresponding DMRS bundling window sizes. For example, certain type of terminal may report its own capability and different terminal capabilities correspond to DMRS bundling window sizes respectively.

It should be noted that the aforementioned DMRS bundling window only take effects in a case that the uplink transmission is performed over multiple slots.

Further, in this embodiment, the impact of invalid symbols may also be considered in a manner similar to that described in the first embodiment, which is not repeated herein.

Embodiment seven:

In this embodiment, the DMRS bundling window size is explicitly configured through RRC signaling. After the terminal receives the indication information of the DMRS bundling window size carried in the RRC signaling, the terminal determines the DMRS bundling window size based on the indication information. In this embodiment, it is assumed that the base station carries N bit indication information in UE-dedicated RRC signaling to indicate the DMRS bundling window size. It is assumed that N=2 bits. The correspondence between the indication signaling and the DMRS bundling window size is shown in the following table:

| DMRS bundling window size indication | DMRS bundling window size |
| --- | --- |
| 00 | DMRS bundling is not allowed |
| 01 | DMRS bundling window size = 2 |
| 10 | DMRS bundling window size = 3 |
| 11 | DMRS bundling window size = 4 |

It should be noted that the above table only provides an example and does not strictly require a one-to-one correspondence between bit indication information carried in RRC signaling and DMRS bundling window size. This application does not exclude indication fields with other sizes.

Further, the RRC signaling indicates that the DMRS bundling window only takes effect in a case that the bundling window size is less than or equal to the number of TTIs used for the uplink transmission. For example, in a case that the uplink transmission occupies 4 slots and the DMRS bundling window size configured by RRC is 8, the DMRS bundling window does not take effect.

Further, the actual DMRS bundling window size may be determined by considering TDD configuration or invalid symbol pattern in a manner similar to method described in first embodiment, which is not limited in the present application.

Further, this embodiment may be combined with any method described in first to third embodiments such as considering threshold or mapping function etc., which is not limited in the present application.

Embodiment eight:

In this embodiment, the network side device indicates the DMRS bundling window size through explicit bits in DCI. The DCI carrying DMRS bundling window size indication information is UE-specific DCI. The cyclic redundancy check (CRC) of UE-specific DCI is DCI scrambled by C-RNTI or TC-RNTI.

In a case that the CRC of DCI is DCI scrambled by C-RNTI, the format of the DCI is DCI format 0_1 and/or DCI format 0_2 for scheduling PUSCH transmission, or DCI format 1_1 and/or DCI format 1_2 for indicating PUCCH transmission. The DCI is added N bits DMRS bundling window size indication field, where N is a positive integer.

In this embodiment, in a case that N=2 bits, which may be used to indicate 4 different DMRS bundling window sizes.

In a case that the CRC of DCI is DCI scrambled by TC-RNTI, the format of the DCI is DCI format 0_0 for scheduling massage 3 (msg3) transmission or DCI format 1_0 for scheduling massage 4 (msg4) transmission.

In a case that the format of the DCI is DCI format 0_0 for scheduling msg3 transmission, N bits in reserved bit field are used to indicate DMRS bundling window size of the terminal. The reserved bit field includes new data indicator (NDI) and hybrid automatic repeat request (HARQ) process number (HPN) field.

In a case that the format of the DCI is DCI format 1_0 for scheduling msg4 transmission, N bits in reserved bit field are used to indicate DMRS bundling window size of the terminal. The reserved bit field includes downlink assignment index (DAI) field.

It should be noted that how many bits are used in reserved bits and what DMRS bundling window sizes indicated by bits are not limited by the present application.

Further, this embodiment may be combined with any method described in first to seventh embodiments such as considering invalid symbols or determining threshold T etc., which is not limited in the present application.

Embodiment nine:

In this embodiment, the base station indicates the DMRS bundling window size by the explicit bits in DCI. The DCI carrying the DMRS bundling window size indication information is common DCI, that is, the DCI for scheduling broadcast data. The CRC of the DCI is DCI scrambled by SI-RNTI and/or RA-RNTI and/or P-RNTI and the format of the DCI is DCI format 1_0.

In an embodiment, reserved bits in the DCI indicate one or a group of DMRS bundling window sizes. In a case that the reserved bits in the DCI indicate a group of DMRS bundling window sizes, a bitmap mode is adopted for indication. In a case that the bit in bitmap is 1, the corresponding DMRS bundling window takes effect and in a case that the bit in bitmap is 0, the corresponding DMRS bundling window does not take effect. The correspondence between the bitmap and the DMRS bundling window is determined by the predefined protocol. The terminal determines the actual DMRS bundling window size from a group of DMRS bundling window sizes based on its own capability.

Further, this embodiment may be combined with any method described in first to seventh embodiments such as considering invalid symbols or setting threshold T etc., which is not limited in the present application.

Embodiment ten:

In a case that the frequency hopping for the uplink transmission is enabled, after the DMRS bundling window size is determined using any method described in first to ninth embodiments above, the actual DMRS bundling window size needs to be further determined based on frequency hopping pattern. The actual DMRS bundling window size is the same as the number of slots included in each hop. In this embodiment, as shown in FIG. 8, it is assumed that DMRS bundling window size determined by above method is 4 slots (slot#n+3 to slot#n+6) and frequency hopping is enabled, each hop (including Hop#1 and Hop#2) is assumed to contain two consecutive slots, then in this scenario, the actual DMRS bundling window size is 2 slots.

In any one of the aforementioned embodiments, the DMRS bundling window size is determined. As such, multi-slot DMRS transmission pattern may be designed based on the DMRS bundling window size, and an optimal uplink transmission performance may be achieved.

FIG. 9 is a schematic structural diagram of a terminal according to an embodiment of the present application. As shown in FIG. 9, a terminal 900 includes a memory 902, a transceiver 903 and a processor 901, where the processor 901 and the memory 902 may also be physically separated.

The memory 902 is used for storing computer programs; the transceiver 903 is used for receiving and transmitting data under the control of the processor 901.

In FIG. 9, a bus system 904 may include any number of interconnected buses and bridges, linked together by various circuits of one or more processors represented by processor 901 and circuits of memories represented by memory 902. The bus system 904 may also link various other circuits such as peripheral devices, regulators and power management circuits, which are well known in the art and therefore not further described herein. The bus interface provides an interface. The transceiver 903 may be multiple components, that is, including a transmitter and a receiver, providing units for communication with various other devices on transmission media such as wireless channels, wired channels, optical fibers, etc. For different user devices, the user interface 905 may also be an interface capable of connecting external and internal devices, including but not limited to small keyboards, displays, speakers, microphones, joysticks, etc.

The processor 901 is used for managing the bus architecture and general processing. The memory 902 may store data used by the processor 901 in case of performing operations.

In an embodiment, the processor 901 may be a central processing unit (CPU), an application specific integrated circuit (ASIC), a field-programmable gate array (FPGA), or a complex programmable logic device (CPLD). The processor 901 may also adopt a multi-core architecture.

The processor 901 is used for reading the computer program in the memory 902 and executing any of the method provided by the embodiments in the application according to obtained executable instructions. For example: determining a demodulation reference signal (DMRS) bundling window size for an uplink multi-slot DMRS transmission pattern based on a configuration from a network side device or a predefined rule agreed by a network side device and the terminal.

In an embodiment, the determining the DMRS bundling window size for the uplink multi-slot DMRS transmission pattern based on the predefined rule agreed by the network side device and the terminal includes any one of the following:

determining the DMRS bundling window size based on an uplink channel repetition factor;

in a case that a function of transmitting one transport block over multiple slots is enabled, determining the DMRS bundling window size based on a number of slots for transmitting one transport block; and
predefining the DMRS bundling window size.

In an embodiment, the determining the DMRS bundling window size based on the uplink channel repetition factor includes any one of the following:

determining the uplink channel repetition factor as the DMRS bundling window size;
in a case that the uplink channel repetition factor is greater than the first given threshold value, determining the first given threshold value as the DMRS bundling window size; or in a case that the uplink channel repetition factor is less than the first given threshold value, determining the uplink channel repetition factor as the DMRS bundling window size; and
determining the DMRS bundling window size based on a given function relationship between the DMRS bundling window size and the uplink channel repetition factor.

In an embodiment, the uplink channel repetition factor is semi-statically indicated by radio resource control (RRC) signaling or may be indicated by associated information fields in DCI.
In an embodiment, the determining the DMRS bundling window size based on the number of slots for transmitting one transport block includes any one of the following:

determining the number of slots for transmitting one transport block as the DMRS bundling window size;
in a case that the number of slots for transmitting one transport block is greater than the second given threshold value, determining the second given threshold value as the DMRS bundling window size; or in a case that the number of slots for transmitting one transport block is less than the second given threshold value, determining the number of slots for transmitting one transport block as the DMRS bundling window size; and
determining the DMRS bundling window size based on a given function relationship between the DMRS bundling window size and the number of slots for transmitting one transport block.

In an embodiment, the predefining the DMRS bundling window size includes any one of the following:

predefining the DMRS bundling window size based on a DMRS bundling window size supported by a terminal type; or
predefining the DMRS bundling window size based on a DMRS bundling window size supported by a terminal capability.

In an embodiment, the method further includes:

determining whether the terminal has a DMRS bundling capability based on the terminal capability; and
in a case that the terminal has the DMRS bundling capability, determining the DMRS bundling window size.

In an embodiment, the method further includes:
transmitting terminal capability information to the network side device, where the terminal capability information carries information indicating whether the terminal has the DMRS bundling capability.
In an embodiment, the determining the DMRS bundling window size for the uplink multi-slot DMRS transmission pattern based on the configuration from the network side device includes:

receiving indication information configured by the network side device through RRC signaling or DCI, where the indication information carries the DMRS bundling window size; and
determining the DMRS bundling window size based on the indication information.

In an embodiment, the DMRS bundling window takes effect in a case that the DMRS bundling window size is less than or equal to the number of transmission time intervals (TTI) used for the uplink transmission.
In an embodiment, the DCI is UE-specific DCI or common DCI. The indication information is carried by an explicit bit in the UE-specific DCI or by a reserved bit in the common DCI.
In an embodiment, the UE-specific DCI may be scrambled by cell radio network temporary identifier (C-RNTI) or temporary cell radio network temporary identifier (TC-RNTI).
In an embodiment, the common DCI is DCI scrambled by system information radio network temporary identifier (SI-RNTI), random access radio network temporary identifier (RA-RNTI) and/or paging radio network temporary identifier (P-RNTI), and the DCI format of the common DCI is 1_0.

In an embodiment, the indication information carried by reserved bits in the common DCI indicates a group of the DMRS bundling window sizes.

In an embodiment, after determining the DMRS bundling window size for the uplink multi-slot DMRS transmission pattern, the method further includes:

determining actual DMRS bundling window size by dividing the DMRS bundling window size based on a TDD resource configuration or an invalid symbol.

In an embodiment, after determining the DMRS bundling window size for the uplink multi-slot DMRS transmission pattern, the method further includes:

in a case that frequency hopping for the uplink transmission is enabled, determining the actual DMRS bundling window size based on a frequency hopping pattern,
where the actual DMRS bundling window size is less than or equal to a number of slots included in each hop.

The terminal in the embodiments of the application, by determining the DMRS bundling window size for the uplink multi-slot DMRS transmission pattern, allows multi-slot DMRS transmission pattern to be designed based on the DMRS bundling window size. As such, the optimal the uplink transmission performance is achieved.

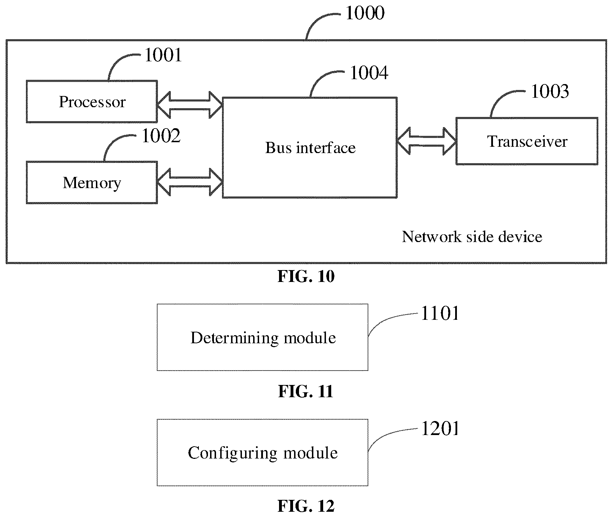

FIG. 10 is a schematic structural diagram of a network side device according to an embodiment of the present application. As shown in FIG. 10, a network side device 1000 includes a memory 1002, a transceiver 1003 and a processor 1001, where the processor 1001 and the memory 1002 may also be physically separated.

The memory 1002 is used for storing computer programs; and the transceiver 1003 is used for receiving and transmitting data under the control of the processor 1001.

In FIG. 10, a bus system 1004 may include any number of interconnected buses and bridges, linked together by various circuits of one or more processors represented by processor 1001 and circuits of memories represented by memory 1002. The bus system 1004 may also link various other circuits such as peripheral devices, regulators and power management circuits, which are well known in the art and therefore not further described herein. The bus interface provides an interface. The transceiver 1003 may be multiple components, that is, including a transmitter and a receiver, providing units for communication with various other devices on transmission media such as wireless channels, wired channels, optical fibers, etc. The processor 1001 is used for managing the bus architecture and general processing. The memory 1002 may store data used by the processor 1001 in a case that performing operations.

The processor 1001 may be a central processing unit (CPU), an application specific integrated circuit (ASIC), a field-programmable gate array (FPGA), or a complex programmable logic device (CPLD). The processor 1001 may also adopt a multi-core architecture.

The processor 1001 is used for reading the computer program in the memory 1002 and executing any of the method provided by the embodiments in the application according to obtained executable instructions. For example: determining a DMRS bundling window size for an uplink multi-slot DMRS transmission pattern based on a predefined rule, where the predefined rule is pre-agreed between the network side device and a terminal; or configuring a DMRS bundling window size for an uplink multi-slot DMRS transmission pattern to a terminal.

In an embodiment, the determining the DMRS bundling window size for the uplink multi-slot DMRS transmission pattern based on the predefined rule includes any one of the following:

determining the DMRS bundling window size based on an uplink channel repetition factor;
in a case that a function of transmitting one transport block over multiple slots is enabled, determining the DMRS bundling window size based on the number of slots for transmitting one transport block; and
predefining the DMRS bundling window size.

In an embodiment, the determining the DMRS bundling window size based on the uplink channel repetition factor includes any one of the following:

determining the uplink channel repetition factor as the DMRS bundling window size;
in a case that the uplink channel repetition factor is greater than the first given threshold value, determining the first given threshold value as the DMRS bundling window size; or in a case that the uplink channel repetition factor is less than the first given threshold value, determining the uplink channel repetition factor as the DMRS bundling window size; and
determining the DMRS bundling window size based on a given function relationship between the DMRS bundling window size and the uplink channel repetition factor.

In an embodiment, the uplink channel repetition factor is indicated to the terminal through semi-static configuration of RRC signaling or through the associated information field in DCI.

In an embodiment, the determining the DMRS bundling window size based on the number of slots for transmitting one transport block includes any one of the following:

determining the number of slots for transmitting one transport block as the DMRS bundling window size;

in a case that the number of slots for transmitting one transport block is greater than the second given threshold value, determining the second given threshold value as the DMRS bundling window size; or in a case that the number of slots for transmitting one transport block is less than the second given threshold value, determining the number of slots for transmitting one transport block as the DMRS bundling window size; and

determining the DMRS bundling window size based on a given function relationship between the DMRS bundling window size and the number of slots for transmitting one transport block.

In an embodiment, the predefining the DMRS bundling window size includes any one of the following:

predefining the DMRS bundling window size based on a DMRS bundling window size supported by a terminal type; or

predefining the DMRS bundling window size based on a DMRS bundling window size supported by a terminal capability.

In an embodiment, the method further includes:

receiving terminal capability information transmitted by the terminal, where the terminal capability information carries information indicating whether the terminal has the DMRS bundling capability;

in a case that the terminal has the DMRS bundling capability, determining the DMRS bundling window size based on the terminal capability information.

In an embodiment, the configuring the DMRS bundling window size for the uplink multi-slot DMRS transmission pattern to the terminal includes:

transmitting the indication information to the terminal through RRC signaling or DCI, where the indication information carries the DMRS bundling window size.

In an embodiment, the DMRS bundling window takes effect in a case that the DMRS bundling window size is less than or equal to the number of transmission time intervals (TTI) used for the uplink transmission.

In an embodiment, the DCI is UE-specific DCI or common DCI. The indication information is carried by an explicit bit in the UE-specific DCI or by a reserved bit in the common DCI.

In an embodiment, the UE-specific DCI may be scrambled by cell radio network temporary identifier (C-RNTI) or temporary cell radio network temporary identifier (TC-RNTI).

In an embodiment, the common DCI is DCI scrambled by system information radio network temporary identifier (SI-RNTI), random access radio network temporary identifier (RA-RNTI) and/or paging radio network temporary identifier (P-RNTI), and the DCI format of the common DCI is 1_0.

In an embodiment, the indication information carried by reserved bits in the common DCI indicates a group of the DMRS bundling window sizes.

In an embodiment, the method further includes:

determining actual DMRS bundling window size by dividing the DMRS bundling window size based on the TDD resource configuration or an invalid symbol.

In an embodiment, the method further includes:

in a case that frequency hopping for the uplink transmission is enabled, determining, based on the frequency hopping pattern, the actual DMRS bundling window size,

where, the actual DMRS bundling window size is less than or equal to a number of slots included in each hop.

The network side device in the embodiments of the application, by determining the DMRS bundling window size for the uplink multi-slot DMRS transmission pattern, allows multi-slot DMRS transmission pattern to be designed based on the DMRS bundling window size. As such, the optimal the uplink transmission performance is achieved.

It should be noted that, the terminal and the network side device in the embodiments of the application can implement all the methods provided by the above method embodiments and achieve the same effects. The same parts and beneficial effects as the method embodiments are not repeated herein.

FIG. 11 is the block diagram of the apparatus for determining a DMRS bundling window applied to the terminal according to an embodiment of the present application. The apparatus is applied to the terminal, and includes:

a determining module 1101, used for determining a demodulation reference signal (DMRS) bundling window size for an uplink multi-slot DMRS transmission pattern based on a configuration from a network side device or a predefined rule agreed by a network side device and the terminal.

In an embodiment, the determining module is used for executing any one of the following:

a first determining submodule, used for determining the DMRS bundling window size based on the uplink channel repetition factor;
a second determining submodule, used for determining the DMRS bundling window size based on a number of slots for transmitting one transport block, in a case that a function of transmitting one transport block over multiple slots is enabled; and
a third determining submodule, used for predefining the DMRS bundling window size.

In an embodiment, the first determining submodule is used for executing any one of the following:

determining the uplink channel repetition factor as the DMRS bundling window size;
in a case that the uplink channel repetition factor is greater than the first given threshold value, determining the first given threshold value as the DMRS bundling window size; or in a case that the uplink channel repetition factor is less than the first given threshold value, determining the uplink channel repetition factor as the DMRS bundling window size; and
determining the DMRS bundling window size based on a given function relationship between the DMRS bundling window size and the uplink channel repetition factor.

In an embodiment, the uplink channel repetition factor is semi-statically indicated by radio resource control (RRC) signaling or may be indicated by associated information fields in DCI.

In an embodiment, the second determining submodule is used for executing any one of the following:

determining the number of slots for transmitting one transport block as the DMRS bundling window size;
in a case that the number of slots for transmitting one transport block is greater than the second given threshold value, determining the second given threshold value as the DMRS bundling window size; or in a case that the number of slots for transmitting one transport block is less than the second given threshold value, determining the number of slots for transmitting one transport block as the DMRS bundling window size; and
determining the DMRS bundling window size based on a given function relationship between the DMRS bundling window size and the number of slots for transmitting one transport block.

In an embodiment, the third determining submodule is used for executing any one of the following:

predefining the DMRS bundling window size based on a DMRS bundling window size supported by a terminal type; or predefining the DMRS bundling window size based on a DMRS bundling window size supported by a terminal capability.

In an embodiment, the apparatus further includes:
a judgement module, used for determining whether the terminal has the DMRS bundling capability based on the terminal capability; and in a case that the terminal has the DMRS bundling capability, determining the DMRS bundling window size.

In an embodiment, the apparatus further includes:
a transmitting module, used for transmitting terminal capability information to the network side device, where the terminal capability information carries information indicating whether the terminal has the DMRS bundling capability.

In an embodiment, the determining module is used for:
receiving indication information configured by network side device through RRC signaling or DCI, where the indication information carries the DMRS bundling window size; and determining the DMRS bundling window size based on the indication information.

In an embodiment, the DMRS bundling window takes effect in a case that the DMRS bundling window size is less than or equal to the number of transmission time intervals (TTI) used for the uplink transmission.

In an embodiment, the DCI is UE-specific DCI or common DCI. The indication information is carried by an explicit bit in the UE-specific DCI or a reserved bit in the common DCI.

In an embodiment, the UE-specific DCI may be scrambled by cell radio network temporary identifier (C-RNTI) or temporary cell radio network temporary identifier (TC-RNTI).

In an embodiment, the common DCI is DCI scrambled by system information radio network temporary identifier (SI-RNTI), random access radio network temporary identifier (RA-RNTI) and/or paging radio network temporary identifier (P-RNTI), and the DCI format of the common DCI is 1_0.

In an embodiment, the indication information carried by reserved bits in the common DCI indicates a group of the DMRS bundling window sizes.

In an embodiment, after determining the DMRS bundling window size for the uplink multi-slot DMRS transmission pattern, the method further includes:
determining actual DMRS bundling window size by dividing the DMRS bundling window size based on the TDD resource configuration or an invalid symbol.

In an embodiment, after determining the DMRS bundling window size for the uplink multi-slot DMRS transmission pattern, the method further includes:

in a case that the frequency hopping function for the uplink transmission is enabled, determining, based on frequency hopping pattern, the actual DMRS bundling window size,
where the actual DMRS bundling window size is less than or equal to the number of slots included in each hop.

FIG. 12 is a block diagram of an apparatus for determining a DMRS bundling window applied to a network side device according to an embodiment of the present application. The apparatus is applied to the network side device, and includes:
a configuring module 1201, used for determining a DMRS bundling window size for an uplink multi-slot DMRS transmission pattern based on a predefined rule, where the predefined rule is pre-agreed between the network side device and a terminal; or configuring a DMRS bundling window size for an uplink multi-slot DMRS transmission pattern to a terminal.

In an embodiment, the configuring module is used for executing any one of the following:

a first determining submodule, used for determining the DMRS bundling window size based on the uplink channel repetition factor;
a second determining submodule, used for determining the DMRS bundling window size based on a number of slots for transmitting one transport block, in a case that a function of transmitting one transport block over multiple slots is enabled; and
a third determining submodule, used for predefining the DMRS bundling window size.

In an embodiment, the first determining submodule is used for executing any one of the following:

determining the uplink channel repetition factor as the DMRS bundling window size;
in a case that the uplink channel repetition factor is greater than the first given threshold value, determining the first given threshold value as the DMRS bundling window size; or in a case that the uplink channel repetition factor is less than the first given threshold value, determining the uplink channel repetition factor as the DMRS bundling window size; and
determining the DMRS bundling window size based on a given function relationship between the DMRS bundling window size and the uplink channel repetition factor.

In an embodiment, the uplink channel repetition factor is indicated to the terminal through semi-static configuration of RRC signaling or through the associated information field in DCI.

In an embodiment, the second determining submodule is used for executing any one of the following:

determining the number of slots for transmitting one transport block as the DMRS bundling window size;
in a case that the number of slots for transmitting one transport block is greater than the second given threshold value, determining the second given threshold value as the DMRS bundling window size; or in a case that the number of slots for transmitting one transport block is less than the second given threshold value, determining the number of slots for transmitting one transport block as the DMRS bundling window size; and
determining the DMRS bundling window size based on a given function relationship between the DMRS bundling window size and the number of slots for transmitting one transport block.

In an embodiment, the third determining submodule is used for executing any one of the following:

predefining the DMRS bundling window size based on a DMRS bundling window size supported by a terminal type; or
predefining the DMRS bundling window size based on a DMRS bundling window size supported by a terminal capability.

In an embodiment, the apparatus further includes:
a receiving module, used for receiving the terminal capability information transmitted by the terminal, where the terminal capability information carries information indicating whether the terminal has the DMRS bundling capability; and determining the DMRS bundling window size based on the terminal capability information, in a case that the terminal is determined to has the DMRS bundling capability.

In an embodiment, the configuring module is used for:

transmitting the indication information to the terminal through RRC signaling or DCI, where the indication information carries the DMRS bundling window size.

In an embodiment, the DMRS bundling window takes effect in a case that the DMRS bundling window size is less than or equal to the number of transmission time intervals (TTI) used for the uplink transmission.

In an embodiment, the DCI is UE-specific DCI or common DCI. And the indication information is carried by an explicit bit in the UE-specific DCI or a reserved bit in the common DCI.

In an embodiment, the UE-specific DCI may be scrambled by cell radio network temporary identifier (C-RNTI) or temporary cell radio network temporary identifier (TC-RNTI).

In an embodiment, the common DCI is DCI scrambled by system information radio network temporary identifier (SI-RNTI), random access radio network temporary identifier (RA-RNTI) and/or paging radio network temporary identifier (P-RNTI), and the DCI format of the common DCI is 1_0.

In an embodiment, the indication information carried by reserved bits in the common DCI indicates a group of the DMRS bundling window sizes.

In an embodiment, the method further includes:

determining actual DMRS bundling window size by dividing the DMRS bundling window size based on the TDD resource configuration; or an invalid symbol.

In an embodiment, the method further includes:

in a case that frequency hopping for the uplink transmission is enabled, determining, based on frequency hopping pattern, the actual DMRS bundling window size,

where the actual DMRS bundling window size is less than or equal to a number of slots included in each hop.

It should be noted that, the division of units/modules in the embodiments of the present application is schematic, and is only a logical function division, and there can be other division manners in actual implementation. In an embodiment, the functional units in the various embodiments of the present application can be integrated into one processing unit, or each unit can exist alone physically, or two or more units can be integrated into one unit. The aforementioned integrated unit can be implemented in the form of hardware or software functional unit.

In the case that the integrated unit is implemented in the form of a software functional unit and sold or used as an independent product, it can be stored in a computer readable storage medium. Based on such understanding, the solutions of the present application in essence or a part of the solutions that contributes to the related art, or all or part of the solutions, can be embodied in the form of a software product, which is stored in a storage medium, including several instructions to cause a computer device (which can be a personal computer, server, or network device, etc.) or a processor to perform all or part of the steps of the methods described in the respective embodiments of the present application. The storage medium described above includes various media that can store program codes, such as USB flash disk, mobile hard disk, read-only memory (ROM), random access memory (RAM), magnetic disk, or optical disk.

It should be noted that, the apparatus in the embodiments of the application can implement all the methods provided by the above method embodiments and achieve the same technical effects. The same parts and beneficial effects as the method embodiments are not repeated.

In some embodiments, it also provides a non-transitory computer readable storage medium storing computer programs that cause a processor to perform the methods in the above embodiments.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

According to the embodiment, the processor readable medium stores a computer program, and the computer program is used for causing the processor to perform the method for determining a DMRS bundling window.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These computer-executable instructions may be stored in computer-readable memory capable of directing a computer or other programmable data processing apparatus to operate in a particular manner, and the instructions stored in the computer-readable memory may result in a manufacture including instruction means, the instruction means can perform the functions specified in one or more flows of the flowchart and/or one or more blocks of the block diagram.

These computer-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations can be made in the present application without departing from the scope of the present application. Thus, provided that these modifications and variations of the present application are within the scope of the claims of the present application and their equivalents, the present application is also intended to cover such modifications and variations.

**Claims**

1. A method for determining a demodulation reference signal, DMRS, bundling window, applied to a terminal, comprising:

   determining a DMRS bundling window size for an uplink multi-slot DMRS transmission pattern based on a configuration from a network side device or a predefined rule agreed by a network side device and the terminal.

2. The method of claim 1, wherein the determining the DMRS bundling window size for the uplink multi-slot DMRS transmission pattern based on the predefined rule agreed by the network side device and the terminal comprises any one of the followings:

   determining the DMRS bundling window size based on an uplink channel repetition factor;
   in a case that a function of transmitting one transport block over multiple slots is enabled, determining the DMRS bundling window size based on a number of slots for transmitting one transport block;
   predefining the DMRS bundling window size.

3. The method of claim 2, wherein the determining the DMRS bundling window size based on the uplink channel repetition factor comprises any one of:

   determining the uplink channel repetition factor as the DMRS bundling window size;
   in a case that the uplink channel repetition factor is greater than a first given threshold value, determining the first given threshold value as the DMRS bundling window size; or in a case that the uplink channel repetition factor is less than the first given threshold value, determining the uplink channel repetition factor as the DMRS bundling window size; and
   determining the DMRS bundling window size based on a given function relationship between the DMRS bundling window size and the uplink channel repetition factor.

4. The method of claim 3, wherein
   the uplink channel repetition factor is semi-statically indicated by radio resource control, RRC, signaling; or the uplink channel repetition factor is indicated by an associated information field in downlink control information, DCI.

5. The method of claim 2, wherein the determining the DMRS bundling window size based on the number of slots for transmitting one transport block comprises any one of the followings:

   determining the number of slots for transmitting one transport block as the DMRS bundling window size;
   in a case that the number of slots for transmitting one transport block is greater than a second given threshold value, determining the second given threshold value as the DMRS bundling window size; or in a case that the number of slots for transmitting one transport block is less than the second given threshold value, determining the number of slots for transmitting one transport block as the DMRS bundling window size;
determining the DMRS bundling window size based on a given function relationship between the DMRS bundling window size and the number of slots for transmitting one transport block.

6. The method of claim 2, wherein the predefining the DMRS bundling window size comprises:

predefining the DMRS bundling window size based on a DMRS bundling window size supported by a terminal type; or
predefining the DMRS bundling window size based on a DMRS bundling window size supported by a terminal capability.

7. The method of claim 1, further comprising:

determining whether the terminal has a DMRS bundling capability based on terminal capability; and
in a case that the terminal has the DMRS bundling capability, determining the DMRS bundling window size.

8. The method of claim 1, further comprising:

transmitting terminal capability information to the network side device,
wherein the terminal capability information carries information indicating whether the terminal has a DMRS bundling capability.

9. The method of claim 1, wherein the determining the DMRS bundling window size for the uplink multi-slot DMRS transmission pattern based on the configuration from the network side device comprises:

receiving indication information configured by the network side device through an RRC signaling or DCI, wherein the indication information carries the DMRS bundling window size; and
determining the DMRS bundling window size based on the indication information.

10. The method of claim 9, wherein
a DMRS bundling window takes effect in a case that the DMRS bundling window size is less than or equal to a number of transmission time intervals, TTI, used for an uplink transmission.

11. The method of claim 9, wherein
the DCI is a UE-specific DCI or a common DCI, and the indication information is carried by an explicit bit in the UE-specific DCI or a reserved bit in the common DCI.

12. The method of claim 11, wherein
the UE-specific DCI is DCI scrambled by a cell radio network temporary identifier, C-RNTI, or a temporary cell radio network temporary identifier, TC-RNTI.

13. The method of claim 11, wherein
the common DCI is DCI scrambled by a system information radio network temporary identifier, SI-RNTI, a random access radio network temporary identifier, RA-RNTI, and/or a paging radio network temporary identifier, P-RNTI, and a DCI format of the common DCI is 1_0.

14. The method of claim 11, wherein
the indication information carried by the reserved bit in the common DCI indicates a group of the DMRS bundling window sizes.

15. The method of any one of claims 1 to 14, wherein after the determining the DMRS bundling window size for the uplink multi-slot DMRS transmission pattern, the method further comprising:
dividing the DMRS bundling window size based on a time division duplex, TDD, resource configuration or an invalid symbol to obtain actual DMRS bundling window sizes.

16. The method of any one of claims 1 to 14, wherein after the determining the DMRS bundling window size for the uplink multi-slot DMRS transmission pattern, the method further comprising:

in a case that frequency hopping for the uplink transmission is enabled, determining an actual DMRS bundling window size based on a frequency hopping pattern,
wherein the actual DMRS bundling window size is less than or equal to a number of slots comprised in each hop.

17. A method for determining a demodulation reference signal, DMRS, bundling window, applied to a network side device, comprising:
determining a DMRS bundling window size for an uplink multi-slot DMRS transmission pattern based on a predefined rule, wherein the predefined rule is pre-agreed between the network side device and a terminal; or configuring a DMRS bundling window size for an uplink multi-slot DMRS transmission pattern to a terminal.

18. The method of claim 17, wherein the determining the DMRS bundling window size for the uplink multi-slot DMRS transmission pattern based on the predefined rule comprises any one of the followings:

determining the DMRS bundling window size based on an uplink channel repetition factor;
in a case that a function of transmitting one transport block over multiple slots is enabled, determining the DMRS bundling window size based on a number of slots for transmitting one transport block; and
predefining the DMRS bundling window size.

19. The method of claim 18, wherein the determining the DMRS bundling window size based on the uplink channel repetition factor comprises any one of:

determining the uplink channel repetition factor as the DMRS bundling window size;
in a case that the uplink channel repetition factor is greater than a first given threshold value, determining the first given threshold value as the DMRS bundling window size; or in a case that the uplink channel repetition factor is less than the first given threshold value, determining the uplink channel repetition factor as the DMRS bundling window size; and
determining the DMRS bundling window size based on a given function relationship between the DMRS bundling window size and the uplink channel repetition factor.

20. The method of claim 19, wherein
indicating the uplink channel repetition factor to the terminal semi-statically by radio resource control, RRC, signaling; or indicating the uplink channel repetition factor to the terminal by an associated information field in downlink control information, DCI.

21. The method of claim 18, wherein the determining the DMRS bundling window size based on the number of slots for transmitting one transport block comprises any one of the followings:

determining the number of slots for transmitting one transport block as the DMRS bundling window size;
in a case that the number of slots for transmitting one transport block is greater than a second given threshold value, determining the second given threshold value as the DMRS bundling window size; or in a case that the number of slots for transmitting one transport block is less than the second given threshold value, determining the number of slots for transmitting one transport block as the DMRS bundling window size; and
determining the DMRS bundling window size based on a given function relationship between the DMRS bundling window size and the number of slots for transmitting one transport block.

22. The method of claim 18, wherein the predefining the DMRS bundling window size comprises:

predefining the DMRS bundling window size based on a DMRS bundling window size supported by a terminal type; or
predefining the DMRS bundling window size based on a DMRS bundling window size supported by a terminal capability.

23. The method of claim 17, further comprising:

receiving terminal capability information transmitted by the terminal, wherein the terminal capability information carries information indicating whether the terminal has a DMRS bundling capability; and
in a case that the terminal has the DMRS bundling capability determined based on the terminal capability information, determining the DMRS bundling window size.

**24.** The method of claim 17, wherein the configuring the DMRS bundling window size for the uplink multi-slot DMRS transmission pattern to the terminal comprises:
transmitting indication information to the terminal through an RRC signaling or DCI, wherein the indication information carries the DMRS bundling window size.

**25.** The method of claim 24, wherein
a DMRS bundling window takes effect in a case that the DMRS bundling window size is less than or equal to a number of transmission time intervals, TTI, used for an uplink transmission.

**26.** The method of claim 24, wherein
the DCI is a UE-specific DCI or a common DCI, and the indication information is carried by an explicit bit in the UE-specific DCI or a reserved bit in the common DCI.

**27.** The method of claim 26, wherein
the UE-specific DCI is DCI scrambled by a cell radio network temporary identifier, C-RNTI, or a temporary cell radio network temporary identifier, TC-RNTI.

**28.** The method of claim 26, wherein
the common DCI is DCI scrambled by a system information radio network temporary identifier, SI-RNTI, a random access radio network temporary identifier, RA-RNTI, and/or a paging radio network temporary identifier, P-RNTI, and a DCI format of the common DCI is 1_0.

**29.** The method of claim 26, wherein
the indication information carried by the reserved bit in the common DCI indicates a group of the DMRS bundling window sizes.

**30.** The method of any one of claims 17 to 29, further comprising:
dividing the DMRS bundling window size based on a time division duplex, TDD, resource configuration or an invalid symbol to obtain actual DMRS bundling window sizes.

**31.** The method of any one of claims 17 to 29, further comprising:

in a case that frequency hopping for the uplink transmission is enabled, determining an actual DMRS bundling window size based on a frequency hopping pattern,
wherein the actual DMRS bundling window size is less than or equal to a number of slots comprised in each hop.

**32.** A terminal, comprising:

a processor,
a memory storing a computer program, and
a transceiver transmitting and receiving data under a control of the processor,
wherein the computer program, when executed by the processor, causes the processor to perform the following operations of:
determining a demodulation reference signal, DMRS, bundling window size for an uplink multi-slot DMRS transmission pattern based on a configuration from a network side device or a predefined rule agreed by the network side device and the terminal.

**33.** The terminal of claim 32, wherein the determining the DMRS bundling window size for the uplink multi-slot DMRS transmission pattern based on the predefined rule agreed by the network side device and the terminal comprises any one of:

determining the DMRS bundling window size based on an uplink channel repetition factor;
in a case that a function of transmitting one transport block over multiple slots is enabled, determining the DMRS bundling window size based on a number of slots for transmitting one transport block; and
predefining the DMRS bundling window size.

**34.** The terminal of claim 33, wherein the determining the DMRS bundling window size based on the uplink channel repetition factor comprises any one of:

determining the uplink channel repetition factor as the DMRS bundling window size;

in a case that the uplink channel repetition factor is greater than a first given threshold value, determining the first given threshold value as the DMRS bundling window size; or in a case that the uplink channel repetition factor is less than the first given threshold value, determining the uplink channel repetition factor as the DMRS bundling window size; and

determining the DMRS bundling window size based on a given function relationship between the DMRS bundling window size and the uplink channel repetition factor.

35. The terminal of claim 34, wherein

the uplink channel repetition factor is semi-statically indicated by radio resource control, RRC, signaling; or the uplink channel repetition factor is indicated by an associated information field in downlink control information, DCI.

36. The terminal of claim 33, wherein the determining the DMRS bundling window size based on the number of slots for transmitting one transport block comprises any one of:

determining the number of slots for transmitting one transport block as the DMRS bundling window size;

in a case that the number of slots for transmitting one transport block is greater than a second given threshold value, determining the second given threshold value as the DMRS bundling window size; or in a case that the number of slots for transmitting one transport block is less than the second given threshold value, determining the number of slots for transmitting one transport block as the DMRS bundling window size; and

determining the DMRS bundling window size based on a given function relationship between the DMRS bundling window size and the number of slots for transmitting one transport block.

37. The terminal of claim 33, wherein the predefining the DMRS bundling window size comprises:

predefining the DMRS bundling window size based on a DMRS bundling window size supported by a terminal type; or

predefining the DMRS bundling window size based on a DMRS bundling window size supported by a terminal capability.

38. The terminal of claim 32, wherein the operations further comprise:

determining whether the terminal has a DMRS bundling capability based on the terminal capability; and

in a case that the terminal has the DMRS bundling capability, determining the DMRS bundling window size.

39. The terminal of claim 32, further comprising:

transmitting terminal capability information to the network side device,

wherein the terminal capability information carries information indicating whether the terminal has a DMRS bundling capability.

40. The terminal of claim 32, wherein the determining the DMRS bundling window size for the uplink multi-slot DMRS transmission pattern based on the configuration from the network side device comprises:

receiving indication information configured by the network side device through an RRC signaling or DCI, wherein the indication information carries the DMRS bundling window size; and

determining the DMRS bundling window size based on the indication information.

41. The terminal of claim 40, wherein

a DMRS bundling window takes effect in a case that the DMRS bundling window size is less than or equal to a number of transmission time intervals, TTI, used for an uplink transmission.

42. The terminal of claim 40, wherein

the DCI is a UE-specific DCI or a common DCI, and the indication information is carried by an explicit bit in the UE-specific DCI or a reserved bit in the common DCI.

43. The terminal of claim 42, wherein

the UE-specific DCI is DCI scrambled by a cell radio network temporary identifier, C-RNTI, or a temporary cell radio network temporary identifier, TC-RNTI.

44. The terminal of claim 42, wherein
the common DCI is DCI scrambled by a system information radio network temporary identifier, SI-RNTI, a random access radio network temporary identifier, RA-RNTI, and/or a paging radio network temporary identifier, P-RNTI, and a DCI format of the common DCI is 1_0.

45. The terminal of claim 42, wherein
the indication information carried by the reserved bit in the common DCI indicates a group of the DMRS bundling window sizes.

46. The terminal of any of claims 32 to 45, wherein after the determining the DMRS bundling window size for the uplink multi-slot DMRS transmission pattern, further comprising:
dividing the DMRS bundling window size based on a time division duplex, TDD, resource configuration or an invalid symbol to obtain actual DMRS bundling window sizes.

47. The terminal of any of claims 32 to 45, wherein after the determining the DMRS bundling window size for the uplink multi-slot DMRS transmission pattern, further comprising:

in a case that frequency hopping for the uplink transmission is enabled, determining an actual DMRS bundling window size based on a frequency hopping pattern,
wherein the actual DMRS bundling window size is less than or equal to a number of slots comprised in each hop.

48. A network side device, comprising:

a processor,
a memory storing a computer program, and
a transceiver transmitting and receiving data under a control of the processor,
wherein the computer program, when executed by the processor, causes the processor to perform the following operations of:
determining a DMRS bundling window size for an uplink multi-slot DMRS transmission pattern based on a predefined rule, wherein the predefined rule is pre-agreed between the network side device and a terminal; or configuring a DMRS bundling window size for an uplink multi-slot DMRS transmission pattern to a terminal.

49. The network side device of claim 48, wherein the determining the DMRS bundling window size for the uplink multi-slot DMRS transmission pattern based on the predefined rule comprises any one of:

determining the DMRS bundling window size based on an uplink channel repetition factor;
in a case that a function of transmitting one transport block over multiple slots is enabled, determining the DMRS bundling window size based on a number of slots for transmitting one transport block; and
predefining the DMRS bundling window size.

50. The network side device of claim 49, wherein the determining the DMRS bundling window size based on the uplink channel repetition factor comprises any one of:

determining the uplink channel repetition factor as the DMRS bundling window size;
in a case that the uplink channel repetition factor is greater than a first given threshold value, determining the first given threshold value as the DMRS bundling window size; or in a case that the uplink channel repetition factor is less than the first given threshold value, determining the uplink channel repetition factor as the DMRS bundling window size; and
determining the DMRS bundling window size based on a given function relationship between the DMRS bundling window size and the uplink channel repetition factor.

51. The network side device of claim 50, wherein indicating the uplink channel repetition factor to the terminal semi-statically radio resource control, RRC, signaling; or indicating the uplink channel repetition factor to the terminal by an associated information field in downlink control information, DCI.

52. The network side device of claim 49, wherein the determining the DMRS bundling window size based on the uplink channel repetition factor comprises any one of:

determining the number of slots for transmitting one transport block as the DMRS bundling window size; in a case that the number of slots for transmitting one transport block is greater than a second given threshold value, determining the second given threshold value as the DMRS bundling window size; or in a case that the number of slots for transmitting one transport block is less than the second given threshold value, determining the number of slots for transmitting one transport block as the DMRS bundling window size; and determining the DMRS bundling window size based on a given function relationship between the DMRS bundling window size and the number of slots for transmitting one transport block.

53. The network side device of claim 49, wherein the predefining the DMRS bundling window size comprises:

predefining the DMRS bundling window size based on a DMRS bundling window size supported by a terminal type; or predefining the DMRS bundling window size based on a DMRS bundling window size supported by a terminal capability.

54. The network side device of claim 49, further comprising:

receiving terminal capability information transmitted by the terminal, wherein the terminal capability information carries information indicating whether the terminal has a DMRS bundling capability; and in a case that the terminal has the DMRS bundling capability, determining the DMRS bundling window size based on the terminal capability information.

55. The network side device of claim 49, wherein the configuring the DMRS bundling window size for the uplink multi-slot DMRS transmission pattern to the terminal comprises:
transmitting indication information to the terminal through an RRC signaling or DCI, wherein the indication information carries the DMRS bundling window size.

56. The network side device of claim 55, wherein
a DMRS bundling window takes effect in a case that the DMRS bundling window size is less than or equal to a number of transmission time intervals, TTI, used for an uplink transmission.

57. The network side device of claim 55, wherein
the DCI is a UE-specific DCI or a common DCI, and the indication information is carried by an explicit bit in the UE-specific DCI or a reserved bit in the common DCI.

58. The network side device of claim 57, wherein
the UE-specific DCI is DCI scrambled by a cell radio network temporary identifier, C-RNTI, or a temporary cell radio network temporary identifier, TC-RNTI.

59. The network side device of claim 57, wherein
the common DCI is DCI scrambled by a system information radio network temporary identifier, SI-RNTI, a random access radio network temporary identifier, RA-RNTI, and/or a paging radio network temporary identifier, P-RNTI, and a DCI format of the common DCI is 1_0.

60. The network side device of claim 57, wherein
the indication information carried by the reserved bit in the common DCI indicates a group of the DMRS bundling window sizes.

61. The network side device of any of claims 48 to 60, further comprising:
dividing the DMRS bundling window size based on a time division duplex, TDD, resource configuration or an invalid symbol to obtain actual DMRS bundling window sizes.

62. The network side device of any of claims 48 to 60, further comprising:

in a case that frequency hopping for the uplink transmission is enabled, determining an actual DMRS bundling window size based on a frequency hopping pattern,

wherein the actual DMRS bundling window size is less than or equal to a number of slots comprised in each hop.

63. An apparatus for determining a demodulation reference signal, DMRS, bundling window, applied to a terminal, comprising:

a determining module, used for determining a DMRS bundling window size for an uplink multi-slot DMRS transmission pattern based on a configuration from a network side device or a predefined rule agreed by a network side device and the terminal.

64. The apparatus of claim 63, wherein the determining module is used for executing any one of:

a first determining submodule, used for determining the DMRS bundling window size based on an uplink channel repetition factor;
a second determining submodule, used for determining the DMRS bundling window size based on a number of slots for transmitting one transport block, in a case that a function of transmitting one transport block over multiple slots is enabled; and
a third determining submodule, used for predefining the DMRS bundling window size.

65. The apparatus of claim 64, wherein the first determining submodule is used for executing any one of:

determining the uplink channel repetition factor as the DMRS bundling window size;
in a case that the uplink channel repetition factor is greater than a first given threshold value, determining the first given threshold value as the DMRS bundling window size; or in a case that the uplink channel repetition factor is less than the first given threshold value, determining the uplink channel repetition factor as the DMRS bundling window size; and
determining the DMRS bundling window size based on a given function relationship between the DMRS bundling window size and the uplink channel repetition factor.

66. The apparatus of claim 65, wherein
the uplink channel repetition factor is semi-statically indicated by radio resource control, RRC, signaling; or the uplink channel repetition factor is indicated by an associated information field in downlink control information, DCI.

67. The apparatus of claim 64, wherein the second determining submodule is used for executing any one of:

determining the number of slots for transmitting one transport block as the DMRS bundling window size;
in a case that the number of slots for transmitting one transport block is greater than a second given threshold value, determining the second given threshold value as the DMRS bundling window size; or in a case that the number of slots for transmitting one transport block is less than the second given threshold value, determining the number of slots for transmitting one transport block as the DMRS bundling window size; and
determining the DMRS bundling window size based on a given function relationship between the DMRS bundling window size and the number of slots for transmitting one transport block.

68. The apparatus of claim 64, wherein the third determining submodule is used for:

predefining the DMRS bundling window size based on a DMRS bundling window size supported by a terminal type; or
predefining the DMRS bundling window size based on a DMRS bundling window size supported by a terminal capability.

69. The apparatus of claim 63, further comprising:

determining whether the terminal has a DMRS bundling capability based on the terminal capability; and
in a case that the terminal has the DMRS bundling capability, determining the DMRS bundling window size.

70. The apparatus of claim 63, further comprising:

a transmitting module, used for transmitting terminal capability information to the network side device,
wherein the terminal capability information carries information indicating whether the terminal has a DMRS bundling capability.

71. The apparatus of claim 63, wherein the determining module is used for:

receiving indication information configured by the network side device through an RRC signaling or DCI, wherein the indication information carries the DMRS bundling window size; and
determining the DMRS bundling window size based on the indication information.

72. The apparatus of claim 71, wherein
a DMRS bundling window takes effect in a case that the DMRS bundling window size is less than or equal to a number of transmission time intervals, TTI, used for an uplink transmission.

73. The apparatus of claim 71, wherein
the DCI is a UE-specific DCI or a common DCI, and the indication information is carried by an explicit bit in the UE-specific DCI or a reserved bit in the common DCI.

74. The apparatus of claim 73, wherein
the UE-specific DCI is DCI scrambled by a cell radio network temporary identifier, C-RNTI, or a temporary cell radio network temporary identifier, TC-RNTI.

75. The apparatus of claim 73, wherein
the common DCI is DCI scrambled by a system information radio network temporary identifier, SI-RNTI, a random access radio network temporary identifier, RA-RNTI, and/or a paging radio network temporary identifier, P-RNTI, and a DCI format of the common DCI is 1_0.

76. The apparatus of claim 73, wherein
the indication information carried by the reserved bit in the common DCI indicates a group of the DMRS bundling window sizes.

77. The apparatus of any of claims 63 to 76, wherein after the determining the DMRS bundling window size for the uplink multi-slot DMRS transmission pattern, further comprising:
dividing the DMRS bundling window size based on a time division duplex, TDD, resource configuration or an invalid symbol to obtain actual DMRS bundling window sizes.

78. The apparatus of any of claims 63 to 76, wherein after the determining the DMRS bundling window size for the uplink multi-slot DMRS transmission pattern, further comprising:

in a case that frequency hopping for the uplink transmission is enabled, determining an actual DMRS bundling window size based on a frequency hopping pattern,
wherein the actual DMRS bundling window size is less than or equal to a number of slots comprised in each hop.

79. An apparatus for determining a demodulation reference signal, DMRS, bundling window, applied to a network side device, comprising:
a configuring module, used for determining a DMRS bundling window size for an uplink multi-slot DMRS transmission pattern based on a predefined rule, wherein the predefined rule is pre-agreed between the network side device and a terminal; or configuring a DMRS bundling window size for an uplink multi-slot DMRS transmission pattern to a terminal.

80. The apparatus of claim 79, wherein the configuring module is used for executing any one of:

a first determining submodule, used for determining the DMRS bundling window size based on an uplink channel repetition factor;
a second determining submodule, used for in a case that a function of transmitting one transport block over multiple slots is enabled, determining the DMRS bundling window size based on a number of slots for transmitting one transport block;
a third determining submodule, used for predefining the DMRS bundling window size.

81. The apparatus of claim 80, wherein the first determining submodule is used for executing any one of:

determining the uplink channel repetition factor as the DMRS bundling window size;

in a case that the uplink channel repetition factor is greater than a first given threshold value, determining the first given threshold value as the DMRS bundling window size; or in a case that the uplink channel repetition factor is less than the first given threshold value, determining the uplink channel repetition factor as the DMRS bundling window size; and

determining the DMRS bundling window size based on a given function relationship between the DMRS bundling window size and the uplink channel repetition factor.

82. The apparatus of claim 81, wherein
indicating the uplink channel repetition factor to the terminal semi-statically by radio resource control, RRC, signaling; or indicating the uplink channel repetition factor to the terminal by an associated information field in downlink control information, DCI.

83. The apparatus of claim 80, wherein the second determining submodule is used for executing any one of:

determining the number of slots for transmitting one transport block as the DMRS bundling window size;
in a case that the number of slots for transmitting one transport block is greater than a second given threshold value, determining the second given threshold value as the DMRS bundling window size; or in a case that the number of slots for transmitting one transport block is less than the second given threshold value, determining the number of slots for transmitting one transport block as the DMRS bundling window size; and
determining the DMRS bundling window size based on a given function relationship between the DMRS bundling window size and the number of slots for transmitting one transport block.

84. The apparatus of claim 80, wherein the third determining submodule is used for:

predefining the DMRS bundling window size based on a DMRS bundling window size supported by a terminal type; or
predefining the DMRS bundling window size based on a DMRS bundling window size supported by a terminal capability.

85. The apparatus of claim 79, further comprising:

a receiving module, used for receiving terminal capability information transmitted by the terminal, wherein the terminal capability information carries information indicating whether the terminal has a DMRS bundling capability; and
in a case that the terminal has the DMRS bundling capability, determining the DMRS bundling window size based on the terminal capability information.

86. The apparatus of claim 79, wherein the configuring module is used for:
transmitting indication information to the terminal through an RRC signaling or DCI, wherein the indication information carries the DMRS bundling window size.

87. The apparatus of claim 86, wherein
a DMRS bundling window takes effect in a case that the DMRS bundling window size is less than or equal to a number of transmission time intervals, TTI, used for an uplink transmission.

88. The apparatus of claim 86, wherein
the DCI is a UE-specific DCI or a common DCI, and the indication information is carried by an explicit bit in the UE-specific DCI or a reserved bit in the common DCI.

89. The apparatus of claim 88, wherein
the UE-specific DCI is DCI scrambled by a cell radio network temporary identifier, C-RNTI, or a temporary cell radio network temporary identifier, TC-RNTI.

90. The apparatus of claim 88, wherein
the common DCI is DCI scrambled by a system information radio network temporary identifier, SI-RNTI, a random access radio network temporary identifier, RA-RNTI, and/or a paging radio network temporary identifier, P-RNTI, and a DCI format of the common DCI is 1_0.

**91.** The apparatus of claim 88, wherein
the indication information carried by the reserved bit in the common DCI indicates a group of the DMRS bundling window sizes.

**92.** The apparatus of any of claims 79 to 91, further comprising:
dividing the DMRS bundling window size based on a time division duplex, TDD, resource configuration or an invalid symbol to obtain actual DMRS bundling window sizes.

**93.** The apparatus of any of claims 79 to 91, further comprising:

in a case that frequency hopping for the uplink transmission is enabled, determining an actual DMRS bundling window size based on a frequency hopping pattern,
wherein the actual DMRS bundling window size is less than or equal to a number of slots comprised in each hop.

**94.** A non-transitory computer readable storage medium storing computer programs that, when executed by a processor, cause the processor to perform the method of any one of claims 1 to 16, or cause the processor to perform the method of any one of claims 17 to 31.

Determining a DMRS bundling window size for an uplink multi-slot DMRS transmission pattern based on a configuration from a network side device or a predefined rule agreed by a network side device and the terminal ~ 101

**FIG. 1**

Determining a DMRS bundling window size for an uplink multi-slot DMRS transmission pattern based on a predefined rule, where the predefined rule is pre-agreed between the network side device and a terminal; or configuring a DMRS bundling window size for an uplink multi-slot DMRS transmission pattern to a terminal ~ 201

**FIG. 2**

Slot#n   #n+1   #n+2   #n+3   #n+4   #n+5   #n+6   #n+7   #n+8   #n+9

R#1    R#2    R#3    R#4

DMRS bundling window=R

UL grant        PUSCH/PUCCH transmission

**FIG. 3**

Slot#n    #n+1    #n+2    #n+3    #n+4    #n+5    #n+6    #n+7    #n+8    #n+9

Drop

R#1    R#2    R#3    R#4

Sub-w#1         Sub-w#2

UL grant        PUSCH transmission

**FIG. 4**

Slot#n    #n+1    #n+2    #n+3    #n+4    #n+5    #n+6    #n+7    #n+8    #n+9

R#1    R#2

Sub-w#1      invalid symbols      Sub-w#2

UL grant        PUCCH transmission

**FIG. 5**

Repetition number = 8

Slot#n    #n+1    #n+2    #n+3    #n+4    #n+5    #n+6    #n+7    #n+8    #n+9

R>T

R#1    R#2    R#3    R#4    R#5    R#6    R#7    R#8

DMRS bundling window=T      DMRS bundling window=T

PUSCH/PUCCH transmission

**FIG. 6**

Repetition
number = 2

| Slot#n | #n+1 | #n+2 | #n+3 | #n+4 | #n+5 | #n+6 | #n+7 | #n+8 | #n+9 |

R<T

R#1    R#2

DMRS bundling
window=2

PUSCH/PUCCH transmission

**FIG. 7**

DMRS bundling window

| Slot#n | #n+1 | #n+2 | #n+3 | #n+4 | #n+5 | #n+6 | #n+7 | #n+8 | #n+9 |

Hop#1

Hop#2

Actual DMRS        Actual DMRS
bundling window=2   bundling window=2

PUSCH/PUCCH transmission

**FIG. 8**

900

901 Processor

904 Bus interface

903 Transceiver

902 Memory

905 User interface

Terminal

**FIG. 9**

1000

1001

Processor

1004

1002

Bus interface

1003

Transceiver

Memory

Network side device

**FIG. 10**

Determining module

1101

**FIG. 11**

Configuring module

1201

**FIG. 12**

## INTERNATIONAL SEARCH REPORT

| International application No. |
| --- |
| **PCT/CN2021/135718** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; CNABS; CNKI; VEN; EPTXT; USTXT; WOTXT; 3GPP: 图案, 图样, 绑定, 捆绑, 集束, 窗口, 大小, 多, 时隙, 指示, 预设, 预定, 无效, 空白, 跳频, 连续, pattern, bundling, window, size, multi+, slot, indication, predetermined, preset, invalid, blank, hop, DMRS, continuous, consecutive

### C. DOCUMENTS CONSIDERED TO BE RELEVANT

| Category* | Citation of document, with indication, where appropriate, of the relevant passages | Relevant to claim No. |
| --- | --- | --- |
| PX | XIAOMI. ""R1-2107938-Discussion on PUCCH enhancements""<br>*3GPP tsg_ran\wg1_rl1*, 06 August 2021 (2021-08-06), | 1-94 |
| X | CATT. "R1-2007875 "Discussion on potential techniques for PUCCH coverage enhancement""<br>*3GPP tsg_ran\wg1_rl1*, 17 October 2020 (2020-10-17),<br>  sections 1-3 | 1-14, 17-29, 32-45, 48-60, 63-76, 79-91, 94 |
| Y | CATT. "R1-2007875 "Discussion on potential techniques for PUCCH coverage enhancement""<br>*3GPP tsg_ran\wg1_rl1*, Vol. , No. , 17 October 2020 (2020-10-17),<br>ISSN: ,<br>  sections 1-3 | 15, 16, 30, 31, 46, 47, 61, 62, 77, 78, 92, 93 |
| Y | Beijing Xiaomi Mobile Software. "R1-2007640 "PUSCH coverage enhancement""<br>*3GPP tsg_ran\wg1_rl1*, 15 October 2020 (2020-10-15),<br>  sections 1-3 | 15, 16, 30, 31, 46, 47, 61, 62, 77, 78, 92, 93 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 February 2022** | **25 February 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/135718** |

**C.    DOCUMENTS CONSIDERED TO BE RELEVANT**

| Category* | Citation of document, with indication, where appropriate, of the relevant passages | Relevant to claim No. |
| --- | --- | --- |
| X | ZTE. "R1-2100098 "Discussion on coverage enhancements for PUCCH""<br>*3GPP tsg_ran\wg1_rl1*, 15 January 2021 (2021-01-15),<br> section 3 | 1-14, 17-29, 32-45, 48-60, 63-76, 79-91, 94 |
| A | CN 111567002 A (QUALCOMM INC.) 21 August 2020 (2020-08-21)<br> entire document | 1-94 |
| A | WO 2019140342 A1 (QUALCOMM INC.) 18 July 2019 (2019-07-18)<br> entire document | 1-94 |

Form PCT/ISA/210 (second sheet) (January 2015)

INTERNATIONAL SEARCH REPORT
Information on patent family members

International application No.

**PCT/CN2021/135718**

| Patent document cited in search report | | | Publication date (day/month/year) | Patent family member(s) | | | Publication date (day/month/year) |
|---|---|---|---|---|---|---|---|
| CN | 111567002 | A | 21 August 2020 | US | 2019222380 | A1 | 18 July 2019 |
| | | | | US | 11101950 | B2 | 24 August 2021 |
| | | | | EP | 3738282 | A1 | 18 November 2020 |
| | | | | WO | 2019140342 | A1 | 18 July 2019 |
| WO | 2019140342 | A1 | 18 July 2019 | US | 2019222380 | A1 | 18 July 2019 |
| | | | | US | 11101950 | B2 | 24 August 2021 |
| | | | | EP | 3738282 | A1 | 18 November 2020 |
| | | | | CN | 111567002 | A | 21 August 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021100651318